# EUROPÄISCHE PATENTSCHRIFT

(11) **EP 2 761 185 B1**
(45) Veröffentlichungstag und Bekanntmachung des Hinweises auf die Patenterteilung: **09.01.2019**
(21) Anmeldenummer: 12745819.8
(22) Anmeldetag: 02.08.2012
(51) Int. Cl.: F04D 13/06, F04D 29/62, H02K 3/52

(54) **KÜHLKREISLAUFPUMPE FÜR EIN KRAFTFAHRZEUG**
COOLING CIRCUIT PUMP FOR A MOTOR VEHICLE
POMPE DE CIRCUIT DE REFROIDISSEMENT POUR UN VÉHICULE AUTOMOBILE

(30) Priorität: 30.09.2011 DE 102011083868
(43) Veröffentlichungstag der Anmeldung: 06.08.2014
(73) Patentinhaber: Robert Bosch GmbH, 70442 Stuttgart (DE)
(72) Erfinder: BRAUN, Johann, 77815 Buehl (DE); SCHMID, Joerg, 77855 Achern (DE); MAHFOUDH, Samir, 77815 Buehl (DE)
(86) Internationale Anmeldenummer: PCT/EP2012/065156
(87) Internationale Veröffentlichungsnummer: WO 2013/045144

(56) Entgegenhaltungen:
- DE-A1- 2 751 516
- DE-A1- 3 737 050
- DE-A1- 3 802 890
- DE-A1- 4 441 378
- DE-A1- 19 842 170
- DE-A1- 19 903 817
- DE-A1-102004 058 591
- DE-A1-102005 039 557

## Beschreibung

### Stand der Technik

Die Erfindung betrifft eine Kühlkreislaufpumpe für ein Kraftfahrzeug.

Aus der 10 2009 028 144 A1 ist eine Kühlkreislaufpumpe für ein Kraftahrzeug bekannt, die einen hydraulischen Teil sowie einen Elektromotor aufweist. Bei einem Einsatz derartiger Wasserpumpen im Automotive-Bereich sind diese erheblichen Vibrations- und Temperaturbelastungen ausgesetzt; beispielsweise beim Einsatz als sogenannte Zusatzwasserpumpe, die den Klimakomfort im Kraftfahrzeug erhöht, den Kühlmittelfluss verbessert und den Heizungskreislauf unterstützt und damit die Restwärmenutzung bei abgestellten Motor ermöglicht. Aus dem Stand der Technik ist es bekannt, dass der Stator des Elektromotors durch Schraub- oder Klebeverbindungen am Motorgehäuse befestigt ist, oder, wie in der DE 38 02 890 A1 beschrieben, mittels einer Rastverbindung befestigt ist.

### Offenbarung der Erfindung

Aufgabe der vorliegenden Erfindung ist es, den Stator des Elektromotors so zu befestigen, dass er bei den durch Vibrationsbelastungen bedingten Massenkräften ausreichend fixiert ist und gleichzeitig in der Lage ist, die temperaturbedingten maßlichen Toleranzen auszugleichen.

Die Aufgabe wird durch die im Anspruch 1 angegebenen Merkmale gelöst.

Durch die in den Unteransprüchen angegebenen Merkmale sind weitere vorteilhafte Ausgestaltungen und Weiterbildungen der Kühlkreislaufpumpe möglich.

Der aus einem Blechpaket aufgebaute Stator wird mittels einer Schnapphakenvorrichtung am bzw. im Motorgehäuse befestigt.

Dazu sind auf der Innenseite des Blechpakets Schnapphaken radial um den Umfang des Motorgehäuses verteilt angeordnet, die mit Hilfe von an ihren Enden ausgebildeten Rastnasen das Blechpaket formschlüssig umgreifen. Die Schnapphaken sind dabei an einem Auflagering befestigt; Auflagering und Schnapphaken sind vorzugsweise einstückig zusammen mit dem Motorgehäuse, z.B. im Spritzgußverfahren hergestellt.

Zwischen Auflagering und dem Blechpaket des Stators ist ein Toleranzausgleichselement angeordnet, das wie eingangs erwähnt, sicherstellt, dass temperaturbedingte Ausdehnungen aufgefangen werden können. Desweiteren dient das Toleranzausgleichselement der einfachen Montage des Stators im Motorgehäuse.

In einer zweiten vorteilhaften Ausführungsform sind die Schnapphaken an einem zwischen Stator und Rotor angeordneten Spaltrohr befestigt.

Eine weitere abgewandelte Ausführungsform besteht darin, dass das Blechpaket in seiner axialen Erstreckung eine Stufe bzw. einen Absatz aufweist, auf dem die Rastnasen der Schnapphaken einrasten.
Figur 1 zeigt einen Querschnitt durch einen Elektromotor einer Kühlkreislaufpumpe.
Figur 2 eine entsprechende Draufsicht auf den Elektromotor,
Figur 3 einen Querschnitt durch einen Elektromotor einer Kühlkreislaufpumpe in einer zweiten Ausführungsform und
Figur 4 einen Querschnitt durch einen Elektromotor einer Kühlkreislaufpumpe in einer dritten Ausführungsform.

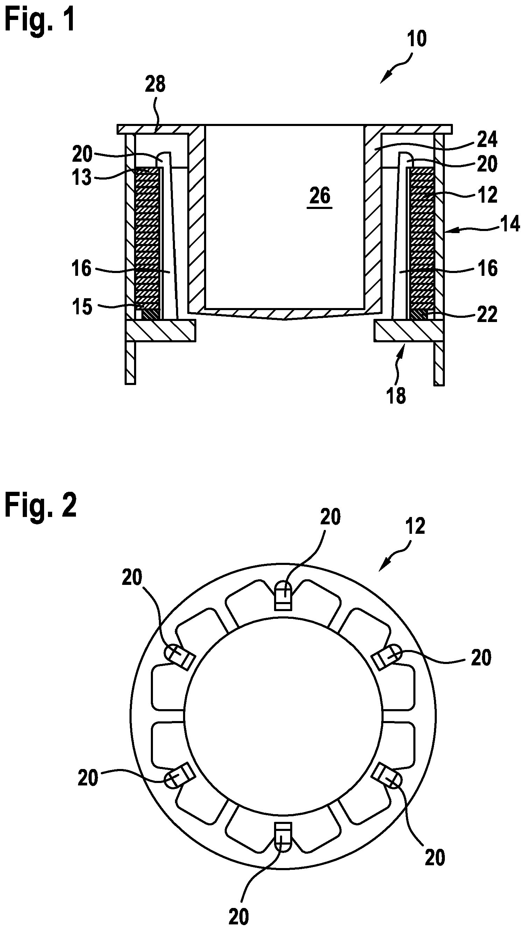

In Figur 1 ist im Querschnitt ein Elektromotor 10 dargestellt, der vorzugsweise bei Kühlkreislaufpumpen im Kraftfahrzeugbereich zum Einsatz kommt. Aufbau und Funktion derartiger Kühlkreislaufpumpen sind generell bekannt, beispielsweise aus der eingangs zitierten DE 10 2009 028 144 A1.

Im folgenden wird jedoch nur auf die Bauteile der Kühlmittelpumpe eingegangen, die zur Erläuterung der Erfindung erforderlich sind. Der ein Blechpaket aufweisende Stator 12 ist in einem Motorgehäuse 14 des Elektromotors 10 aufgenommen. Für eine formschlüssige Fixierung des Stators 12 sind im vorliegenden Ausführungsbeispiel sechs gleichmäßig auf dem Umfang des Motorgehäuses 14 verteilt angeordnete Schnapphaken 16 vorgesehen. Die Schnapphaken 16 setzen dabei im Bereich eines Auflageringes 18 an, der vorzugsweise einstückig zusammen mit den Schnapphaken 16 und dem Motorgehäuse 14 im Spritzgußverfahren hergestellt wird. Die Schnapphaken 16 weisen an ihrem freien Ende entsprechende Rastnasen 20 auf, die im eingebauten Zustand die oberste Lamelle 13 des Blechpakets formschlüssig umgreifen, so dass das gesamte Blechpaket im Motorgehäuse 14 sicher fixiert ist. Zwischen Auflagering 18 und der untersten Lamelle 15 des Blechpakets ist ein dem Durchmesser der Lamellen bzw. des Auflageringes 18 entsprechend angepasstes Toleranzausgleichselement 22 angeordnet, das beispielsweise als Elastomerring oder als Metall- Wellscheibe ausgebildet ist.

Da beim Einsatz des Elektromotors 10 in der Kühlmittelpumpe eine zuverlässige Abdichtung gegenüber dem hydraulischen Teil sichergestellt werden muss, ist - wie in Figur 1 dargestellt - in dem Motorgehäuse 14 ein Spaltrohr bzw. Topf 24 eingebracht, der außen konzentrisch vom Stator 12 umschlossen ist und dessen Innenraum 26 den Rotor (nicht dargestellt) des Elektromotors 10 aufnimmt.

Die Montage erfolgt durch das Fügen des Stators 12 und das Einrasten der Rastnasen 20 auf der obersten Lamelle 13 des Blechpakets nach dem Überdrücken des elastischen Toleranzausgleichselements 22. Im Vergleich zu einer radialen Fixierung des Stators, beispielsweise durch Schrauben oder Kleben, muss die damit erzielte axiale Verspannung des Rotors 12 keine Toleranzen in Umfangsrichtung aufnehmen.

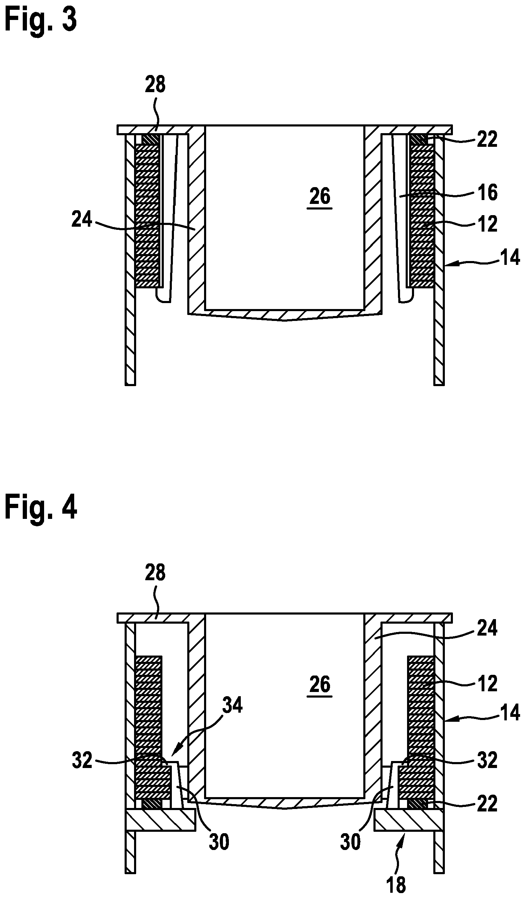

In einem zweiten Ausführungsbeispiel gemäß Fig. 3, bei dem gleiche Bauteile mit gleichen Bezugszeichen versehen sind, sind die Schnapphaken 16 im Gegensatz zum ersten Ausführungsbeispiel an einem aus dem Topf 24 herausgebildeten Flanschring 28 ausgebildet bzw. befestigt.

In einem dritten Ausführungsbeispiel (siehe Figur 4), bei dem wiederum gleiche Bauteile mit gleichen Bezugszeichen versehen sind, ist im Gegensatz zum ersten und zweiten Ausführungsbeispiel die Länge der Schnapphaken 30 und damit der erforderliche Toleranzausgleich reduziert. In diesem Fall ist das Blechpaket des Stators 12 in seiner axialen Erstreckung gestuft ausgebildet und die Rastnasen 32 der Schnapphaken 30 rasten im montierten Zustand auf einem Absatz 34 ein. Der Absatz 34 wird dabei durch die Auswahl von zwei unterschiedlichen Blechringstärken gebildet.

Die zuvor beschriebene Befestigung eines Stators ist natürlich nicht auf den Einsatz in einer Kühlmittelpumpe beschränkt, sondern universell bei Elektromotoren für verschiedenste Anwendungen einsetzbar.

## Patentansprüche

1. Kühlkreislaufpumpe für ein Kraftfahrzeug, mit einem in einem Motorgehäuse (14) angeordneten Stator (12) in dem ein drehbar gelagerter Rotor aufgenommen ist, wobei der Stator (12) im Motorgehäuse (14) formschlüssig aufgenommen ist, und der Stator (12) ein Blechpaket aufweist, das mittels einer Schnapphakenvorrichtung (16, 30) im Motorgehäuse (14) befestigt ist, **dadurch gekennzeichnet, dass** Schnapphaken (16, 30) auf der Innenseite des Blechpakets radial um den Umfang des Motorgehäuses (14) verteilt angeordnet sind, wobei am Ende der Schnapphaken (16, 30) ausgebildete Rastnasen (20, 32) das Blechpaket formschlüssig umgreifen.

2. Kühlkreislaufpumpe nach Anspruch 1, **dadurch gekennzeichnet, dass** die Schnapphaken (16) an einem Auflagering (18) befestigt sind, der vorzugsweise einstückig zusammen mit den Schnapphaken (16) und dem Motorgehäuse (14) hergestellt ist.

3. Kühlkreislaufpumpe nach Anspruch 2, **dadurch gekennzeichnet, dass** zwischen Auflagering (18) und Blechpaket ein Toleranzausgleichselement (22) angeordnet ist.

4. Kühlkreislaufpumpe nach dem Anspruche 1, **dadurch gekennzeichnet, dass** die Schnapphaken (16) an einem zwischen Stator (12) und Rotor angeordneten Spaltrohr (24) befestigt sind.

5. Kühlkreislaufpumpe nach Anspruch 1, **dadurch gekennzeichnet, dass** das Blechpaket des Stators (12) in seiner axialen Erstreckung eine Stufe bzw. einen Absatz (34) aufweist, auf dem die Rastnasen (32) der Schnapphaken (30) einrasten.

## Claims

1. Cooling circuit pump for a motor vehicle, having a stator (12) which is arranged in an engine casing (14) in which a rotatably mounted rotor is accommodated, wherein the stator (12) is accommodated in the engine casing (14) in a positively locking fashion, and the stator (12) has a laminated core which is attached in the engine casing (14) by means of a snap-action hook device (16, 30), **characterized in that** snap-action hooks (16, 30) are arranged on the inner side of the laminated core, distributed radially around the circumference of the engine casing (14), wherein latching projections (20, 32) which are formed at the end of the snap-action hooks (16, 30) engage in a positively locking fashion around the laminated core.

2. Cooling circuit pump according to Claim 1, **characterized in that** the snap-action hooks (16) are attached to a support ring (18) which is preferably manufactured in one piece together with the snap-action hooks (16) and the engine casing (14).

3. Cooling circuit pump according to Claim 2, **characterized in that** a tolerance-compensating element (22) is arranged between the support ring (18) and the laminated core.

4. Cooling circuit pump according to Claim 1, **characterized in that** the snap-action hooks (16) are attached to a can (24) which is arranged between the stator (12) and rotor.

5. Cooling circuit pump according to Claim 1, **characterized in that** the laminated core of the stator (12) has in its axial extent a step or a shoulder (34) at which the latching projections (32) of the snap-action hooks (30) latch in.

## Revendications

1. Pompe de circuit de refroidissement pour un véhicule automobile, comprenant un stator (12) disposé dans un carter moteur (14), dans lequel est reçu un rotor supporté à rotation, le stator (12) étant reçu par engagement positif dans le carter moteur (14) et le stator (12) présentant un paquet de tôles qui est fixé au moyen d'un dispositif d'accrochage par encliquetage (16, 30) dans le carter moteur (14), **caractérisée en ce que** des crochets d'encliquetage (16, 30) sont disposés de manière répartie sur le côté intérieur du paquet de tôles radialement autour de la périphérie du carter moteur (14), des ergots d'encliquetage (20, 32) réalisés à l'extrémité des crochets d'encliquetage (16, 30) venant en prise par engagement positif autour du paquet de tôles.

2. Pompe de circuit de refroidissement selon la revendication 1, **caractérisée en ce que** les crochets d'encliquetage (16) sont fixés sur une bague d'appui (18) qui est fabriquée de préférence d'une seule pièce conjointement avec les crochets d'encliquetage (16) et le carter moteur (14).

3. Pompe de circuit de refroidissement selon la revendication 2, **caractérisée en ce qu'**un élément de compensation des tolérances (22) est disposé entre la bague d'appui (18) et le paquet de tôles.

4. Pompe de circuit de refroidissement selon la revendication 1, **caractérisée en ce que** les crochets d'encliquetage (16) sont fixés à un tube fendu (24) disposé entre le stator (12) et le rotor.

5. Pompe de circuit de refroidissement selon la revendication 1, **caractérisée en ce que** le paquet de tôles du stator (12) présente, dans son étendue axiale, un gradin ou un épaulement (34) sur lequel s'encliquètent les ergots d'encliquetage (32) des crochets d'encliquetage (30).
